# EUROPÄISCHE PATENTANMELDUNG

(11) **EP 1 274 057 A1**
(43) Veröffentlichungstag der Anmeldung: **08.01.2003**
(21) Anmeldenummer: 01116069.4
(22) Anmeldetag: 02.07.2001
(51) Int. Cl.: G08G 1/005, G08G 1/0968, G01C 21/26

(54) **System und Verfahren zur Bereitstellung von reiseleitenden Informationen auf einem mobilen Kommunikationsgerät**

(71) Anmelder: Siemens Schweiz AG, 8047 Zürich (CH)
(72) Erfinder: Fischer, Michael, Dr., 8932 Mettmenstetten (CH)
(74) Vertreter: Berg, Peter, Dipl.-Ing.

(57) **Zusammenfassung**

Der Erfindung liegt die Aufgabe zugrunde, ein System und Verfahren zur Bereitstellung von reiseleitenden Informationen auf einem mobilen Kommunikationsgerät anzugeben, die es erlauben, besonders effizient die Reiseplanung und die Erreichung des Reiseziels vorzunehmen.

Diese Aufgabe wird erfindungsgemäss dadurch gelöst, dass
a) im Kommunikationsgerät ein Zielort eingebbar und an einen Leitrechner übermittelbar ist,
b) im Leitrechner dem mobilen Kommunikationsgerät ein Aufenthaltsort zuweisbar ist,
c) der Leitrechner Verbindungen zu leittechnischen Einrichtungen für öffentliche Verkehrsmittel aufweist,
d) mittels des Leitrechners von den leittechnischen Einrichtungen die aktuellen Aufenthaltsorte der öffentlichen Verkehrsmittel abrufbar sind,
e) in Abhängigkeit von den aktuellen Aufenthaltsorten der öffentlichen Verkehrsmittel ein individueller Fahrplan von geeigneten öffentlichen Verkehrsmitteln zur Erreichung des Zielortes bestimmbar ist, und
f) der Fahrplan der geeigneten Verkehrsmittel an das mobile Kommunikationsgerät übertragbar und dort optisch und/oder akustisch wiedergebbar ist.

Mit diesem System ist es für einen reisewilligen Nutzer erreicht, dass dieser ohne genaue Kenntnis seines exakten Standorts nur noch den gewünschten Zielort in das mobile Kommunikationsgerät eingeben muss und einen Fahrplan zur Erreichung dieses ziels erhält, der die tatsächliche Lage der in Frage kommenden öffentlichen Verkehrsmittel berücksichtigt. Die Person partizipiert auf diese Weise an den in den leittechnischen Einrichtungen der öffentlichen Verkehrsmittel ohnehin bekannten aktuellen Positionen der in Frage kommenden öffentlichen Verkehrsmittel.

## Beschreibung

Die Erfindung bezieht sich auf ein System und ein Verfahren zur Bereitstellung von reiseleitenden Informationen auf einem mobilen Kommunikationsgerät.

Derartige Systeme sind heutzutage auch unter dem Namen "Elektronische Fahrplanauskunft" bekannt und werden beispielsweise von den Firmen "Mentz Datenverarbeitung GmbH (www.mentzdv.de)" und "Häni-Prolectron AG (www.hpw.ch) angeboten. Diese Systeme sind als Verkehrsinformationssystem konzipiert und helfen einem Nutzer seine Fahrt oder Reise zu planen und ihn während der Reise weiterhin zu informieren. Diese Systeme ermitteln dabei vollständige Wegeketten und informieren auch über die Übergänge an Umsteigepunkten.

Die Auskunft besteht im Einzelnen aus einer tabellarischen Übersicht der Reisemöglichkeiten, enthält tabellarische Detailinformationen, eine Übersichtkarte, einen Plan mit Detailinformation im Start- und Ziel-Bereich, einen Umgebungsplan sowie Tarifinformationen. Die Auskunft kann dabei mit einem mobilen Telefon auch mehrfach abgehört oder in Form einer SMS-Nachricht auf dem Display des mobilen Telefons gelesen werden.

Nachteilig bei derartigen Systemen ist es derzeit jedoch, dass der Nutzer eines öffentlichen Verkehrsmittels seinen Startort für eine Fahrt/Reise genau kennen muss und der zugriff auf quasi-statische Fahrplandaten vorgenommen wird, die von den aktuellen Verhältnissen im öffentlichen Verkehr zum Teil stark abweichen können.

Der Erfindung liegt daher die Aufgabe zugrunde, ein System und Verfahren zur Bereitstellung von reiseleitenden Informationen auf einem mobilen Kommunikationsgerät anzugeben, die es erlauben, besonders effizient die Reiseplanung und die Erreichung des Reiseziels vorzunehmen.

Diese Aufgabe wird bezüglich des Systems der eingangs genannten Art erfindungsgemäss dadurch gelöst, dass
a) im Kommunikationsgerät ein Zielort eingebbar und an einen Leitrechner übermittelbar ist,
b) im Leitrechner dem mobilen Kommunikationsgerät ein Aufenthaltsort zuweisbar ist,
c) der Leitrechner Verbindungen zu leittechnischen Einrichtungen für öffentliche Verkehrsmittel aufweist,
d) mittels des Leitrechners von den leittechnischen Einrichtungen die aktuellen Aufenthaltsorte der öffentlichen Verkehrsmittel abrufbar sind,
e) in Abhängigkeit von den aktuellen Aufenthaltsorten der öffentlichen Verkehrsmittel ein individueller Fahrplan von geeigneten öffentlichen Verkehrsmitteln zur Erreichung des Zielortes bestimmbar ist, und
f) der Fahrplan der geeigneten Verkehrsmittel an das mobile Kommunikationsgerät übertragbar und dort optisch und/oder akustisch wiedergebbar ist.

Mit diesem System ist es für einen reisewilligen Nutzer erreicht, dass dieser ohne genaue Kenntnis seines exakten Standorts nur noch den gewünschten Zielort in das mobile Kommunikationsgerät eingeben muss und einen Fahrplan zur Erreichung dieses Ziels erhält, der die tatsächliche Lage der in Frage kommenden öffentlichen Verkehrsmittel berücksichtigt. Die Person partizipiert auf diese Weise an den in den leittechnischen Einrichtungen der öffentlichen Verkehrsmittel ohnehin bekannten aktuellen Positionen der in Frage kommenden öffentlichen Verkehrsmittel. Damit entfällt für den Nutzer beispielsweise der Bedarf, sich bei einem Zugbegleiter nach den Auswirkungen einer Verspätung des jetzigen Zuges oder eines von ihm an einem Umsteigepunkt erwarteten Zuges erkundigen zu müssen, zumal derartige Informationen auch dem Zugbegleiter häufig nicht bekannt sind.

In vorteilhafter Ausgestaltung der Erfindung ist es vorgesehen, dass das mobile Kommunikationsgerät ein Ortserkennungsmodul aufweist und das mobile Kommunikationsgerät die Information über den aktuellen Aufenthaltsort an den Leitrechner übermittelt. Für diese Art der Standortermittlung sind beispielsweise ein GPS-Modul, das in das mobile Kommunikationsgerät integriert ist, oder eine Ortung über GSM-R geeignet. Eine hierzu alternative Möglichkeit besteht darin, einen Standort einer Sende/Empfangseinheit, mit dem das mobile Kommunikationsgeräts aktuell kommuniziert, dem mobilen Kommunikationsgerät als Aufenthaltsort zuzuweisen.

In besonders vorteilhafter Weiterbildung der Erfindung ist es vorgesehen, die Generierung des individuellen Fahrplans während der Reise zum Zielort zu wiederholen, und bei einem Aktualisierungsbedarf einen aktualisierten Fahrplan an das mobile Kommunikationsgerät zu übermitteln. Auf diese Weise kann jederzeit den Änderungen in der vorgesehenen Fahrtabfolge Rechnung getragen werden. Derartige Änderungen sind beispielsweise das verspätete Eintreffen eines Anschlusszuges am einem Umsteigepunkt oder der Ausfall eines Anschlusszuges, die es erforderlich machen können, in dem gerade benutzten Verkehrsmittel bis zu einem nächsten geeigneten Umsteigepunkt zu verbleiben und dort auf ein alternatives Verkehrsmittel umzusteigen, so dass ein Zeitund/oder Komfortverlust auf dem Weg zum Zielort so weit wie möglich vermieden werden kann. Hierbei kann es sich zur Vermeidung der Verschmälerung des Reisekomforts als besonders vorteilhaft erweisen, wenn ein aktualisierter Fahrplan nur bis zu einem vorgegebaren Zeitpunkt vor Erreichen eines Umsteigepunktes übermittelt wird und so dem Nutzer ein allzu hektischer Wechsel des Verkehrsmittels erspart bleibt, was beispielsweise für ein Familie mit kleinen Kindern gilt, die vor dem Umsteigen einen gewissen Zeitvorlauf benötigen um einen Ausstieg an einem Umsteigepunkt so komfortabel wie möglich zu gestalten. Diese Feststellung gilt sicher auch in übertragbarer Weise für ältere, vielleicht auch in ihrer Beweglichkeit schon eingeschränkte Reisende.

Um dem Leitrechner die Zuweisung des Aufenthaltsortes des Nutzers möglich sicher und zuverlässig zu erlauben, kann es vorgesehen sein, dass mittels des Leitrechners der Aufenthaltsort des mobilen Kommunikationsgeräts, das bereits mit einem öffentlichen Verkehrsmittel reist, anhand einer Korrelation mit dem aktuellen Aufenthaltsort des öffentlichen Verkehrsmittels als Anwesenheit in diesem bestimmten öffentlichen Verkehrsmittel wertbar ist und somit voraussichtliche Eintreffenszeiten an dem oder den nächsten möglichen Umsteigepunkten bestimmbar sind. Anhand der Ortsinformation, die das mobile Kommunikationsgerät übermittelt, und dem Zusammentreffen dieses Aufenthaltsorts mit dem aktuellen Aufenthaltsort eines Verkehrsmittels wird dann davon ausgegangen, dass sich der Nutzer in diesem bestimmten Verkehrsmittel befindet. Für den Leitrechner ist es dann unmittelbar möglich, zu bestimmen, zu welchem Zeitpunkt ein geplanter Umsteigepunkt erreicht wird. Dieses Zusammentreffen von Aufenthaltsort des mobilen Kommunikationsgeräts und des öffentlichen Verkehrsmittels wird dabei zumindest zweimal verlangt, bevor auf die Anwesenheit in einem bestimmten Verkehrsmittel geschlossen wird. Auf diese Weise wird sicher vermieden, dass eine Fehlzuordnung infolge von parallel fahrenden oder sich kreuzenden Verkehrsmitteln auftritt.

Bezüglich des Verfahrens wird die weiter oben genannte Aufgabe erfindungsgemäss durch einen entsprechend zum System gespiegelten Anspruch 7 gelöst.

Eine besonders vorteilhafte Ausgestaltung sowohl des Verfahrens als auch des Systems sieht es vor, dass nach der Ausgabe des individuellen Fahrplans eine durch eine Quittierung auf dem mobilen Kommunikationsgerät vornehmbare Platzreservierung in den zur Benutzung vorgesehenen öffentlichen Verkehrsmitteln vorgenommen werden kann. Im besonderen bei einer Änderung der Abfolge der Verkehrsmittel infolge von Zugverspätungen oder Zugausfall oder Zugumleitung kann so noch versucht werden, eine Reservierung in den neu vorgesehenen Verkehrsmitteln zu erreichen. Die Bestätigung für die Reservierung und die genauen Reservierungsdaten können ebenfalls an das mobile Kommunikationsgerät übermittelt und dort oder im Leitrechner abrufbar und/oder anzeigbar abgespeichert werden. Eine Erleicherung bezüglich der Eingabe für die Reservierung ergibt sich, wenn auf dem Leitrechner ein Reservierungsprofil gespeichert wird, das abgerufen wird und eine Suche nach den so festgelegten Reservierungskriterien einleitet.

Weitere vorteilhafte Ausgestaltungen der Erfindung sind den übrigen Unteransprüchen zu entnehmen.

Ausführungsbeispiele der Erfindung werden nachfolgend näher erläutert. Ein erstes Beispiel erläutert den Ablauf einer Fahrt mit dem Zug von Münster/Westf. nach Nürnberg über Hamm/Westf., Kassel-Wilhelmshöhe und Würzburg. Mit einem Mobiltelefon wird in diesem Ausführungsbeispiel gegen 8 Uhr morgens eine Servicenummer gewählt, die den Dienst zur Bereitstellung der reiseleitenden Informationen aktiviert. Dieser Dienst fordert den Benutzer des Mobiltelefons nun auf, den gewünschten Zielort einzugeben. Der Benutzer gibt Nürnberg ein und übermittelt diese Eingabe zusammen mit den Aufenthaltsdaten, die mit einem im Mobiltelefon integrierten GPS-Modul erhalten worden sind, an den Leitrechner für diesen Dienst. Wenige Sekunden später erhält der Benutzer die für ihn nächste Reisemöglichkeit an den gewünschten Zielort in Form des folgenden Fahrplans:

| | AB | | AN |
|---|---|---|---|
| 08:35 Uhr | MS-Prinzipalm. | 08:50 Uhr | MS-Hbf. |
| 09:05 Uhr | Münster/Westf. | 09:37 Uhr | Hamm/Westf. |
| ca. 10:10 Uhr | Hamm/Westf. | ca. 12:25 Uhr | Kassel/Wilh |
| 13:20 Uhr | Kassel/Wilh. | ca. 15:25 Uhr | Nürnberg |

Somit weist der Benutzer des Dienstes nun mehr, dass er um 08:35 Uhr mit dem Bus von der Haltestelle "Münster-Prinzipalmarkt" zum Hauptbahnhof fahren muss, den er um 08:50 Uhr erreichen wird. Anschliessend folgt eine Regionalbahn von Münster nach Hamm, dort der Umstieg in einen Interregio-Zug nach Kassel-Wilhelmshöhe und von dort weiter mit dem ICE nach Nürnberg. Auf dem Mobiltelefon erhält der Benutzer nun jeweils etwa 5 Minuten vor den jeweiligen Umsteigepunkten den Hinweis auf den anstehenden Umsteigepunkt.

Der auf dem Mobiltelefon aktivierte Dienst, d.h. genauer der diesen Dienst unterstützende Leitrechner, greift nun mehr auf die leittechnisch vorhandenen Daten des Verkehrsverbundes Münsterland, der Zugleitzentralen in Hamm, Kassel-Wilhelmhöhe und Nürnberg zu. Die mit der Abkürzung "ca." indizierten Abfahrs- und Ankunftszeiten zeigen dem Benutzer bereits zum Abfragezeitpunkt, dass dieser Zug sich nicht mehr fahrplanmässig bewegt, sondern weist eindeutig auf eine Abweichung vom Fahrplan hin. In diesem Fall wird der Interregio-Zug im Hamm mit einer Verspätung von etwa 15 Minuten losfahren. Diese Verspätung ist leittechnisch mit dem Auftreten des Grundes bekannt, weil der Interregio-Zug aus Aachen kommend beispielsweise aufgrund eines Signalisierungsproblems oder eines technischen Problems der Lokomotive ausserplanmässig in Düsseldorf 15 Minuten länger warten musste. Diese Verspätung von 15 Minuten wird leider in Kassel-Wilhelmshöhe dazu führen, dass der ICE, der aus Hamburg kommend nach München fährt, dort zum ansonsten möglich gewesenen Abfahrzeitpunkt von 12:20 Uhr nicht mehr erreicht wird. Der Benutzer kann sich also schon zu diesem frühen Zeitpunkt darauf einstellen, in Kassel-Wilhelmshöhe einen längeren Aufenthalt als geplant zu haben. Zugleich erlaubt ihm das frühzeitige Bekanntsein dieser Änderung beispielsweise noch Reservierungen in dem neuen, eine Stunde später ab Kassel-Wilhelmshöhe fahrenden ICE-Zug vornehmen zu können. Hierzu kann die Reservierungsfunktion des Dienstes aktiviert und die Reservierung, wenn noch möglich, durch eine SMS-Meldung angezeigt und anschliessend durch Quittierung platz- und geldtechnisch gebucht werden.

Der Benutzer erhält somit kurz vor dem Halt in Hamm den Hinweis auf den bevorstehenden Umstieg und besteigt darauf den - wie bereits bekannt - verspäteten Interregio-Zug. Während der etwa zweistündigen Fahrt in diesem Zug teilt der aktivierte Service dem Benutzer rechtzeitig vor dem Umstieg in Kassel-Wilhelmshöhe eine Änderung des Fahrplans mit. Weil der ICE beispielsweise aufgrund einer unvorhergesehenen Tunnelbaustelle zwischen Hannover und Göttingen etwa 10 Minuten Zeit verloren hat, wird der Anschluss an den ursprünglich geplanten ICE doch in Kassel-Wilhelmshöhe erreicht. Dieser Service macht es nun wieder frühzeitig möglich, entsprechend zu disponieren, ohne dass der Zugbegleiter gesucht und bemüht werden müsste. Auch von der mitunter sparsamen Ansage derartiger Änderungen im Zug ist der Benutzer unabhängig.

Diese Anpassung des ursprünglich vorgegebenen Fahrplans ist nur möglich, weil tatsächlich ein Zugriff auf die leittechnisch vorhandenen Daten vorgenommen wird und der Service laufend den Aufenthaltsort des reisenden Benutzers bestimmt und so abschätzen kann, wann der Benutzer und die in Frage kommenden Verkehrsmittel an bestimmten für den Benutzer relevanten Umsteigepunkten ankommen wird.

Ein zweites Beispiel zeigt, dass selbstverständlich auch Zugdaten und Flugzeugdaten kombiniert werden können. Ein sich in Kassel aufhaltender Reisender kann den Dienst aktivieren, um herauszufinden, auf welchem Weg er am schnellsten beispielsweise London erreichen kann. Aus der Sicht von Kassel bieten sich ihm drei Flughäfen an, die er in relativ kurzer Zeit erreichen könnte, nämlich Hannover, Frankfurt und Nürnberg. Die Eingabe von London führt nun dazu, dass der Leitrechner die leittechnisch vorhandenen Daten der Flugsicherheitsüberwachung und der entsprechenden Zugdaten anfragt und so für den Benutzer entscheidet, von welchem dieser drei Flughäfen der Flug nach London führen wird. Auch hier erscheint wieder ein Fahrplan mit der Angabe der geeigneten Zugverbindung und dem anschliessenden Flug. Auf diese Weise lässt sich für den Benutzer ein erheblicher Zeitvorteil erzielen, zum einen, weil er seinen Zielort schneller erreichen kann und zum anderen, weil er sich nicht um die entsprechenden Auskünfte selbst bemühen muss, was beispielsweise mittels WAP für die möglichen Flughäfen und die Bahnverbindungen dorthin vergleichsweise mühsam sein kann.

Vielmehr ist der Benutzer vollkommen autark von diesen Diensten und ist stets über die aktuellsten Vorgänge informiert. Weiter ist es für den nicht ortskundigen Benutzer besonders wertvoll, dass er seine Startposition nicht kennen muss, denn die Ermittlung des momentanen Aufenthaltsortes ist ein Bestandteil des Dienstes. Hierzu sind verschiedene Möglichkeiten denkbar, diese Orterkennung mehr oder weniger genau durchzuführen. Sehr einfach gestaltet sich die Ortserkennung, wenn das mobile Kommunikationsgerät über ein GPS-Modul verfügt, das es erlaubt, den Standort bis auf wenige Meter genau zu bestimmen und diese Standortdaten an den Leitrechner übermittelt. Alternativ hierzu kann der Standort einer Antenne, mit der das mobile Kommunikationsgerät aktuell kommuniziert, als Standort des mobilen Kommunikationsgeräts fingiert werden. Die sich hierdurch ergebenden Abweichungen vom tatsächlichen Standort haben möglicherweise nur eine Relevanz im Nahverkehrsbereich und führen im besonderen in Städten nur zu Ungenauigkeiten von wenigen hundert Metern.

Weiter stellt der Leitrechner in diesem System und bei der Anwendung dieses Verfahren insofern eine besonders bedeutsame Komponente dar, weil er durch seine Programmierung nach dem Erhalt eines gewünschten Reiseziels sehr selektiv auf die leittechnisch vorhandenen Daten zugreifen kann. Wenn also beispielhaft der reisende Nutzer einem Verkehrsmittel fest zugeordnet werden kann und bestimmte Streckenpunkte schon passiert sind, sind nur die leittechnischen Daten einer im allgemeinen geringen Anzahl von weiteren Verkehrsmitteln von dem Leitrechner genau bekannten Verkehrsleitstellen abzufragen. Auf diese Weise kann der zur Bedienung des Dienstes erforderliche Datenaustausch vergleichweise gering gehalten werden, was dem Dienst eine hohe Verfügbarkeit bei vergleichweise geringen Systemressourcen ermöglicht.

## Patentansprüche

1. System zur Bereitstellung von reiseleitenden Informationen auf einem mobilen Kommunikationsgerät, bei dem
a) im Kommunikationsgerät ein Zielort eingebbar und an einen Leitrechner übermittelbar ist,
b) im Leitrechner dem mobilen Kommunikationsgerät ein Aufenthaltsort zuweisbar ist,
c) der Leitrechner Verbindungen zu leittechnischen Einrichtungen für öffentliche Verkehrsmittel aufweist,
d) mittels des Leitrechners von den leittechnischen Einrichtungen die aktuellen Aufenthaltsorte der öffentlichen Verkehrsmittel abrufbar sind,
e) in Abhängigkeit von den aktuellen Aufenthaltsorten der öffentlichen Verkehrsmittel ein individueller Fahrplan von geeigneten öffentlichen Verkehrsmitteln zur Erreichung des Zielortes bestimmbar ist, und
f) der Fahrplan der geeigneten Verkehrsmittel an das mobile Kommunikationsgerät übertragbar und dort optisch und/oder akustisch wiedergebbar ist.

2. System nach Anspruch 1,
**dadurch gekennzeichnet, dass**
das mobile Kommunikationsgerät ein Ortserkennungsmodul aufweist und das mobile Kommunikationsgerät die Information über den aktuellen Aufenthaltsort an den Leitrechner übermittelt.

3. System nach Anspruch 1,
**dadurch gekennzeichnet, dass**
ein Standort einer Sende/Empfangseinheit, mit dem das mobile Kommunikationsgeräts kommuniziert, dem mobilen Kommunikationsgerät als Aufenthaltsort zuweisbar ist.

4. System nach einem der Ansprüche 1 bis 3,
**dadurch gekennzeichnet, dass**
die Generierung des individuellen Fahrplans während der Reise zum Zielort wiederholbar ist, und bei einem Aktualisierungsbedarf ein aktualisierter Fahrplan an das mobile Kommunikationsgerät übermittelbar ist.

5. System nach Anspruch 4,
**dadurch gekennzeichnet, dass**
ein aktualisierter Fahrplan nur bis zu einem vorgegebaren Zeitpunkt vor Erreichen eines Umsteigepunktes übermittelbar ist.

6. System nach einem der Ansprüche 1 bis 5,
**dadurch gekennzeichnet, dass**
mittels des Leitrechners der Aufenthaltsort des mobilen Kommunikationsgeräts, das bereits mit einem öffentlichen Verkehrsmittel reist, anhand einer Korrelation mit dem aktuellen Aufenthaltsort des öffentlichen Verkehrsmittels als Anwesenheit in diesem bestimmten öffentlichen Verkehrsmittel wertbar ist und somit voraussichtliche Eintreffenszeiten an dem oder den nächsten möglichen Umsteigepunkten bestimmbar sind.

7. Verfahren zur Bereitstellung von reiseleitenden Informationen auf einem mobilen Kommunikationsgerät, bei dem
a) im Kommunikationsgerät ein Zielort eingegeben und an einen Leitrechner übermittelt wird,
b) im Leitrechner dem mobilen Kommunikationsgerät ein Aufenthaltsort zugewiesen wird,
c) mittels des Leitrechners von den leittechnischen Einrichtungen die aktuellen Aufenthaltsorte der öffentlichen Verkehrsmittel abgerufen werden,
d) in Abhängigkeit von den aktuellen Aufenthaltsorten der öffentlichen Verkehrsmittel ein individueller Fahrplan von geeigneten öffentlichen Verkehrsmitteln zur Erreichung des Zielortes bestimmt wird, und
f) der Fahrplan der geeigneten Verkehrsmittel an das mobile Kommunikationsgerät übertragen und dort optisch und/oder akustisch wiedergegeben wird.

8. Verfahren nach Anspruch 7,
**dadurch gekennzeichnet, dass**
das mobile Kommunikationsgerät ein Ortserkennungsmodul aufweist und mittels des mobilen Kommunikationsgeräts die Information über den aktuellen Aufenthaltsort an den Leitrechner übermittelt wird.

9. Verfahren nach Anspruch 7,
**dadurch gekennzeichnet, dass**
ein Standort einer Sende/Empfangseinheit, mit dem das mobile Kommunikationsgeräts kommuniziert, dem mobilen Kommunikationsgerät als Aufenthaltsort zugewiesen wird.

10. Verfahren nach einem der Ansprüche 7 bis 9,
**dadurch gekennzeichnet, dass**
die Generierung des individuellen Fahrplans während der Reise zum Zielort wiederholt wird, und bei einem Aktualisierungsbedarf ein aktualisierter Fahrplan an das mobile Kommunikationsgerät übermittelt wird.

11. Verfahren nach Anspruch 10,
**dadurch gekennzeichnet, dass**
ein aktualisierter Fahrplan nur bis zu einem vorgegebaren Zeitpunkt vor Erreichen eines Umsteigepunktes übermittelt wird und bei Vorliegen nach dem vorgebbaren Zeitpunkt unterdrückt wird.

12. Verfahren nach einem der Ansprüche 7 bis 11,
**dadurch gekennzeichnet, dass**
mittels des Leitrechners der Aufenthaltsort des mobilen Kommunikationsgeräts, das bereits mit einem öffentlichen Verkehrsmittel reist, anhand einer Korrelation mit dem aktuellen Aufenthaltsort des öffentlichen Verkehrsmittels als Anwesenheit in diesem bestimmten öffentlichen Verkehrsmittel gewertet wird und somit voraussichtliche Eintreffenszeiten an dem oder den nächsten möglichen Umsteigepunkten bestimmt werden.

13. Verfahren nach einem der Ansprüche 7 bis 12,
**dadurch gekennzeichnet, dass**
nach der Ausgabe des individuellen Fahrplans eine durch eine Quittierung auf dem mobilen Kommunikationsgerät vornehmbare Platzreservierung in den zur Benutzung vorgesehenen öffentlichen Verkehrsmitteln vorgenommen wird.

14. Verfahren nach Anspruch 1,
**dadurch gekennzeichnet, dass**
auf dem Leitrechner ein Reservierungsprofil gespeichert wird.
